# EUROPÄISCHE PATENTANMELDUNG

(11) **EP 2 692 813 A1**
(43) Veröffentlichungstag der Anmeldung: **05.02.2014**
(21) Anmeldenummer: 12178930.9
(22) Anmeldetag: 02.08.2012
(51) Int. Cl.: C09K 3/14, B24D 3/14, C04B 35/111, B24D 7/18, B24D 3/08, C09K 3/18, B60S 1/52, B60S 1/50, B60S 1/48, B60S 1/38, B60R 16/00, B60S 1/02, B08B 17/06, H01L 21/00, F02M 37/08, G01N 27/00

(54) **Schleifkorn mit Erhebungen verschiedener Höhen**

(71) Anmelder: ROBERT BOSCH GMBH, 70442 Stuttgart (DE)
(72) Erfinder: Harzer, Andreas, 71701 Schwieberdingen (DE); Hejtmann, Georg, 74395 Mundelsheim (DE); Stedile, Petra, 73728 Esslingen (DE); Buehler, Elisabeth, 71732 Tamm (DE)

(57) **Zusammenfassung**

Die Erfindung betrifft einerseits ein Schleifkorn (10) mit einer Basisfläche (11) und mindestens zwei sich davon erstreckenden Erhebungen (12-1, 12-2, 12-3, 12-4, 12-5), wobei eine erste Erhebung (12-3) senkrecht zur Basisfläche (11) eine erste Höhe (h3) aufweist und eine zweite Erhebung (12-2, 12-4) senkrecht zur Basisfläche (11) eine zweite Höhe (h2, h4) aufweist, welche kleiner ist als die erste Höhe (h3). Das Schleifkorn (10) kann ein keramisches Material enthalten, insbesondere polykristallines α-Al₂O₃. Zudem sind Gesamtheiten von Schleifkörnern (10), Verfahren zum Herstellen von Schleifkörnern (10), Giessformen, Schleifartikel, Verfahren zum Herstellen von Schleifartikeln und Verfahren zum Schleifen einer Oberfläche offenbart.

## Beschreibung

Die vorliegende Erfindung betrifft Schleifkörner mit definierter Form, Gesamtheiten von Schleifkörnern, Verfahren zum Herstellen von Schleifkörnern, Giessformen, Schleifartikel mit Schleifkörnern, Verfahren zum Herstellen von Schleifartikeln sowie Verfahren zum Schleifen einer Oberfläche mit einem Schleifartikel.

Schleifkörner, insbesondere keramische Schleifkörner, mit definierter Form und Grösse sind seit einiger Zeit bekannt.

Die US 5,201,916 offenbart unter anderem flache Schleifkörner mit beispielsweise dreieckiger, rechteckiger oder kreisförmiger Form. Diese Schleifkörner werden aus einer Dispersion hergestellt, die in α-Aluminiumoxid konvertierbare Partikel und eine Flüssigkeit mit einer flüchtigen Komponente enthält. Die Dispersion wird in eine Giessform gegossen, die eine ebene Grundfläche und Vertiefungen aufweist, deren Formen komplementär zur gewünschten Formen der Schleifkörner sind. Anschliessend wird ein Teil der flüchtigen Komponente entfernt, so dass ein Vorprodukt mit der gewünschten Form entsteht. Das Vorprodukt wird dann aus der Giessform entnommen, kalziniert und schliesslich gesintert, so dass das fertige Schleifkorn entsteht.

Die mit diesem Verfahren hergestellten Schleifkörner weisen zwei gegenüberliegende Grundflächen auf, die im Wesentlichen die gleiche geometrische Form haben. Den Schleifkörnern wird eine längere Lebensdauer zugewiesen, da von den Schleifkörnern während des Schleifens ständig kleine Stücke abbrechen, so dass sich neue Schneideflächen ergeben. Die Schleifkörner schärfen sich hierdurch selbst. Von Schleifkörnern mit einer Grundfläche in Form eines Dreiecks, insbesondere eines gleichseitigen Dreiecks, wird vermutet, dass sich beim elektrostatischen Streuen etwa ein bis zwei Drittel so orientieren, dass eine Spitze von der Unterlagen weg weist, während sich weitere Schleifkörner so orientieren, dass die Spitze auf die Unterlage zu weist.

In einem in EP 615 816 beschriebenen alternativen Verfahren werden mittels Extrusion zunächst längliche, stangenförmige Vorprodukte erzeugt, die anschliessend in einzelne Schleifkörner zerteilt werden. Die stangenförmigen Schleifkörner können somit beispielsweise eine Zylinder- oder Prismenform aufweisen.

In der WO 2009/085841 wird ein weiteres Herstellungsverfahren beschrieben, bei dem das Vorprodukt in der Giessform unter Bedingungen getrocknet wird, die zum Brechen des Vorprodukts führen. Die Bruchstücke weisen zumindest teilweise Oberflächen und Kanten auf, die komplementär zu den entsprechenden Oberflächen und Kanten der Giessform sind und daher den durch die Giessform definierten Winkel aufweisen. Diese Oberflächen und Kanten liefern eine erhöhte Schneidfähigkeit. Die weiteren, durch das Brechen entstandenen Oberflächen und Kanten sind hingegen unregelmässig.

Die WO 2010/077495 offenbart Schleifkörner, die eine durchgehende oder eine nicht durchgehende Öffnung enthalten oder eine schalenartige Form aufweisen. Auch Herstellungsverfahren für derartige Schleifkörner sind dort beschrieben. Weitere Schleifkörner mit undefinierten Öffnungen sind in der WO 2010/077518 offenbart. Die WO 2010/077491 befasst sich ebenfalls mit Schleifkörnern mit einer schalenartigen Form.

Aus der WO 2010/077519 sind Schleifkörner bekannt, die zwei gegenüberliegende Hauptflächen und dazwischen verlaufende, zu den Hauptflächen geneigte Seitenflächen aufweisen. Die verschiedenen Seitenflächen eines Schleifkorns können unter verschiedenen Winkeln relativ zu den Hauptflächen geneigt sein.

Das Dokument WO 2011/068724 zeigt ebenfalls Schleifkörner, welche eine Grundseite und eine Spitze sowie dazwischen verlaufende geneigte Seitenflächen aufweisen. Ähnliche Schleifkornformen sind auch in der WO 2011/109188 beschrieben.

Das Dokument WO 2010/077509 befasst sich mit Schleifkörnern, die eine Oberfläche mit einer Vielzahl von Furchen aufweisen. Diese Furchen werden mit Hilfe von komplementären Graten an der Unterseite der Giessform erzeugt.

Die WO 2011/068714 zeigt pyramidenförmige Schleifkörner mit einer parallelogrammförmigen, insbesondere rhombischen, einer drachenförmigen und einer superelliptischen Grundfläche.

Die WO 2011/139562 offenbart Schleifkörner in Form von Tetraedern und Abwandlungen davon. Beispielsweise können die Seitenflächen konkav oder konvex ausgebildet sein, die Ecken des Tetraeders können abgestumpft sein, oder die Kanten können kurvenförmig sein.

Die in WO 2012/018903 beschriebenen Schleifkörner enthalten zwei oder mehr plattenförmige Abschnitte, welche unter einem Winkel zueinander angeordnet sind.

Bei dem in WO 2012/061016 beschriebenen Verfahren wird zunächst ein abrasives Gebilde hergestellt, welches Schleifkornvorprodukte enthält, die über zerbrechliche Stege miteinander verbunden sind. Nach dem Sintern werden die Schleifkörner voneinander getrennt, indem die Stege durchbrochen werden.

Alternativ können Schleifkörner definierter Form auch mit einem Siebdruckverfahren hergestellt werden. Dies beschreibt beispielsweise die WO 96/12776. Dabei wird eine dimensionsstabile Dispersion durch Öffnungen mit definierter Form auf ein Transportband geleitet und anschliessend gehärtet. Die Öffnungen können beispielsweise in einem beweglichen Endlosband enthalten sein.

Eine Weiterentwicklung des Siebdruckverfahrens ist in der WO 2011/087649 offenbart. Bei diesem Verfahren wird die Dispersion mit Hilfe eines Differenzdrucks durch die Öffnungen des Endlosbandes hindurchgedrückt. Bei geeigneter Wahl der Viskosität der Dispersion können mit diesem Verfahren Schleifkörner hergestellt werden, deren Querschnitt sich von einer ersten Hauptseite zu einer zweiten gegenüberliegenden Hauptseite verjüngt.

In der WO 2012/061033 werden Verfahren zum Herstellen von Schleifkörnern definierter Form mit Hilfe von Laserstrahlung beschrieben. Zudem sind weitere spezielle Formen von Schleifkörnern offenbart. Beispielsweise können die Schleifkörner ein Hauptelement und mindestens drei sich davon erstreckende, stangenförmige Elemente enthalten. Insbesondere kann das Schleifkorn die Form eines Kreuzes, eines Grossbuchstaben "T", eines Sternes oder eines griechischen Kleinbuchstaben "λ" haben.

Allgemein wird davon ausgegangen, dass Schleifkörner mit definierter Form in mehrerlei Hinsicht verbesserte Eigenschaften aufweisen: Haben die Schleifkörner bereits zum Beginn ihrer Herstellung eine definierte Form und Grösse, so entfällt ein anschliessender Sortierschritt, mit dem die Schleifkörner ansonsten in verschiedene Grössenfraktionen aufgeteilt werden müssten. Zudem bleiben die Formen und Grössen auch zwischen verschiedenen Produktionschargen nahezu unverändert, was die Schleifeigenschaften sehr gut reproduzierbar macht. Des Weiteren können die Schleifkörner beispielsweise einen erhöhten Gesamtabtrag leisten, eine längere Lebensdauer haben, eine gesteigerte Oberflächengüte der bearbeiteten Oberfläche erzeugen oder ein besser reproduzierbares Schleifergebnis liefern.

Dennoch weisen die aus dem Stand der Technik bekannten Schleifkörner eine Reihe von Nachteilen auf. Beispielsweise enthalten die in US 5,201,916 offenbarten dreieckigen Schleifkörner eine Spitze, die sich von der Unterlage des Schleifmittels weg erstreckt. Wenn dieses Schleifkorn von der Spitze her abgetragen wird, so wird die mit einer bearbeiteten Oberfläche in Kontakt befindliche Querschnittsfläche des Schleifkorns zunehmend grösser, so dass auch die Schleifwirkung mehr und mehr nachlässt. Zudem führt die Vergrösserung der Querschnittsfläche auch dazu, dass eine grössere Reibfläche entsteht, die ihrerseits für eine erhöhte Wärmeentwicklung sorgt. Diese Schleifkörner haben überdies den Nachteil, dass sie elektrostatisch aufgestreut werden müssen, damit überhaupt eine Spitze von der Unterlage weg weist. Die in WO 2010/077491 beschriebenen schalenartigen Schleifkörner weisen jeweils mehrere Spitzen auf, die jedoch bei der Bearbeitung einer Oberfläche ebenfalls nach und nach abgestumpft werden.

Es ist daher eine Aufgabe der vorliegenden Erfindung, die Nachteile des Standes der Technik zumindest teilweise zu beheben. Insbesondere soll also ein Schleifkorn bereitgestellt werden, welches über einen längeren Zeitraum hinweg eine möglichst unveränderte Schleifleistung liefert. Zudem soll das Schleifkorn bevorzugt auch mittels einer mechanischen Streuung mit möglichst grosser Wahrscheinlichkeit in einer gewünschten Orientierung auf einer Schleifmittel-Unterlage aufgebracht werden können.

Diese Aufgabe wird gelöst durch ein Schleifkorn mit definierter Form, welches eine Basisfläche und mindestens zwei sich davon erstreckende Erhebungen aufweist. Erfindungsgemäss weist eine erste Erhebung senkrecht zur Basisfläche eine erste Höhe auf, und eine zweite Erhebung weist senkrecht zur Basisfläche eine zweite Höhe auf, welche kleiner ist als die erste Höhe. Mit anderen Worten enthält das Schleifkorn also mindestens zwei Erhebungen mit voneinander verschiedenen Höhen.

Wenn ein derartiges Schleifkorn mit seiner Basisfläche auf einer Schleifmittel-Unterlage aufliegt, so hat eine erste Erhebung mit der grössten Höhe den grössten Abstand von der Schleifmittel-Unterlage. Diese erste Erhebung gerät daher zuerst mit einer bearbeiteten Oberfläche in Kontakt und entfaltet somit seine Schleifwirkung. Wenn ein Teil der ersten Erhebung bei der Bearbeitung abgetragen wird, so nimmt die Gesamthöhe des Schleifkorns ab. Ist diese Gesamthöhe gleich der Höhe einer zweiten Erhebung mit der zweitgrössten Höhe, so gerät auch diese zweite Erhebung in Kontakt mit der bearbeiteten Oberfläche, so dass sie dann ebenfalls ihre Schleifwirkung entfalten kann.

In vorteilhaften Ausgestaltungen kann das Schleifkorn auch mehr als zwei Erhebungen mit jeweils verschiedenen senkrecht zur Basisfläche gemessenen Höhen aufweisen. Je mehr Erhebungen mit verschiedenen Höhen das Schleifkorn hat, desto häufiger kann während der Bearbeitung einer Oberfläche eine neue, frische Erhebung in Kontakt mit dieser Oberfläche geraten. Natürlich ist es auch denkbar und liegt im Rahmen der Erfindung, dass zwei oder mehr Erhebungen im Wesentlichen die gleiche Höhe aufweisen; auf jeden Fall soll das Schleifkorn aber mindestens zwei Erhebungen mit verschiedenen Höhen enthalten.

Die Basisfläche des Schleifkorns ist bevorzugt im Wesentlichen eben. Ein derartiges Schleifkorn kann besonders stabil an einer Schleifmittel-Unterlage fixiert werden. Es ist jedoch auch denkbar, dass die Basisfläche eine konkave und/oder eine konvexe Wölbung aufweist. Eine derartige Wölbung kann bei der weiter unten beschriebenen Herstellung des Schleifkorns entstehen.

In vorteilhaften Ausführungsbeispielen kann mindestens eine und können bevorzugt mehrere, besonders bevorzugt alle Erhebungen nur jeweils einen einzigen höchsten Punkt aufweisen. Als höchster Punkt wird dabei ein Punkt der Erhebung angesehen, der den grössten senkrecht zur Basisfläche gemessenen Abstand von der Basisfläche aufweist. Bevorzugt ist der höchste Punkt mindestens einer Erhebung, bevorzugt mehrerer Erhebungen, besonders bevorzugt aller Erhebungen als Spitze ausgebildet. Der Punkt wird als Spitze verstanden, wenn ein imaginärer Konus gedanklich derart über die Erhebung gestülpt werden kann, dass die Erhebung ganz im Inneren des Konus liegt und der Punkt die Spitze des Konus bildet.

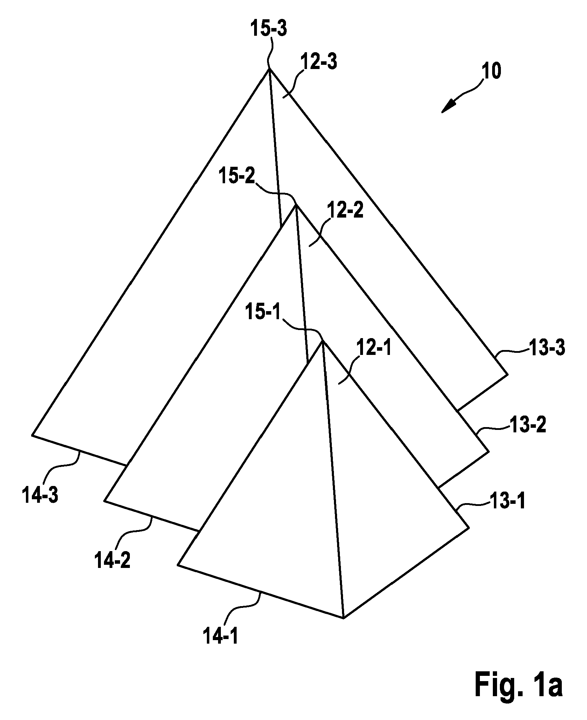

Zweckmässigerweise ist der Öffnungswinkel des Konus weniger als 150°, weniger als 120° oder sogar weniger als 90°. Bevorzugt liegt der Öffnungswinkel im Bereich von 30° bis 70°. Verschiedene Öffnungswinkel können verschiedene Vorteile herbeiführen. Für eine mechanische Streuung ist es vorteilhaft, wenn der Öffnungswinkel im Bereich von 50° bis 70°, bevorzugt von 54° bis 66°, besonders bevorzugt von 58° bis 62° liegt. Diese eher grösseren Winkel führen zu einem flacheren Schleifkorn, so dass sich das Schleifkorn bei einer mechanischen Streuung bevorzugt mit seiner Basisfläche auf einer Schleifmittel-Unterlage orientiert. Im Sinne eines vorteilhaften Spanverhaltens sind eher spitze Öffnungswinkel zweckmässig, die beispielsweise im Bereich von 30° bis 56°, bevorzugt von 36° bis 50°, besonders bevorzugt von 40° bis 50° liegen können. Die hier genannten Vorteile ergeben sich insbesondere bei dem in den Figuren 1a bis 1c dargestellten Ausführungsbeispiel, in dem das Schleifkorn aus mehreren einander durchdringenden Pyramiden besteht.

Alternativ dazu ist es aber auch möglich, dass die Menge der Punkte einer Erhebung mit maximalem Abstand von der Basisfläche einen ebenen, flächigen Bereich bildet, also eine Art von Plateau, welches parallel zur Basisfläche verläuft.

In vielen vorteilhaften Ausgestaltungen kann das Schleifkorn mehrere Teilkörper enthalten oder daraus bestehen, die jeweils mindestens eine der Erhebungen, bevorzugt genau eine Erhebung, des Schleifkorns aufweisen. Bei den Teilkörpern handelt es sich um gedachte Körper, die das Schleifkorn nur gedanklich enthält. Dass das Schleifkorn mindestens zwei oder mehr Teilkörper enthält, ist also nicht dahingehend zu verstehen, dass das Schleifkorn aus zwei oder mehr zunächst separat hergestellten Teilkörpern zusammengefügt wurde oder ist. Stattdessen sind die erfindungsgemässen Schleifkörner einstückig ausgebildet.

Mindestens zwei Teilkörper, insbesondere alle Teilkörper, können zueinander ähnlich sein. Dies bedeutet, dass ein erster dieser Teilkörper durch eine gedankliche geometrische Abbildung in einen zweiten dieser Teilkörper überführt werden kann, wobei die geometrische Abbildung aus einer zentrischen Streckung und/oder einer Verschiebung und/oder einer Drehung und/oder einer Spiegelung zusammengesetzt ist. Bevorzugt kann ein erster Teilkörper durch eine gedankliche geometrische Abbildung in einen zweiten dieser Teilkörper überführt werden, die nur aus einer zentrischen Streckung und einer Verschiebung zusammengesetzt ist. Hierdurch kann erreicht werden, dass eine erste Erhebung, welche aufgrund ihrer grössten Höhe zuerst in Kontakt mit einer bearbeiteten Oberfläche gelangt, eine zumindest ähnliche Schleifwirkung hat wie eine zweite Erhebung, welche aufgrund einer geringeren Höhe erst später in Kontakt mit der bearbeiteten Oberfläche gelangt.

Mindestens ein Teilkörper, bevorzugt mehrere Teilkörper, besonders bevorzugt jeder Teilkörper kann als Kegel oder als Kegelstumpf ausgebildet sein.

Ein Kegel wird hierbei allgemein als ein geometrischer Körper verstanden, der von einer im Wesentlichen ebenen Grundfläche und einer Vielzahl von im Wesentlichen geraden Mantelstrecken begrenzt wird, wobei jeder Punkt der Aussenkontur der Grundfläche durch jeweils eine der Mantelstrecken mit einem gemeinsamen Punkt des Kegels (der Kegelspitze) verbunden ist, wobei die Kegelspitze ausserhalb der durch die Grundfläche definierten Ebene liegt. Die Kegelspitze kann eine der Erhebungen des Schleifkorns bilden. Diese Definition ist also weder auf kreisförmige Kegel noch auf gerade Kegel beschränkt. Insbesondere kann es sich bei dem Kegel um eine Pyramide handeln, bei der die Grundfläche von einem Polygon gebildet wird. Die Pyramide kann beispielsweise ein insbesondere gleichseitiges Dreieck oder Viereck, insbesondere ein Quadrat, als Grundfläche haben.

Entsprechend wird auch ein Kegelstumpf als Teil eines Kegels verstanden, bei dem die Kegelspitze durch einen im Wesentlichen ebenen Schnitt abgetrennt wurde. Die durch diesen gedanklichen Schnitt entstehende Ebene kann eine der Erhebungen des Schleifkorns bilden. Auch ein Kegelstumpf im Sinne dieser Definition hat nicht zwingend eine kreisförmige Grundfläche. Insbesondere kann der Kegelstumpf ein Pyramidenstumpf mit einer Grundfläche sein, die beispielsweise als insbesondere gleichseitiges Dreieck oder Viereck, insbesondere als Quadrat, ausgebildet sein kann.

Die Grundfläche mindestens eines Kegels und/oder mindestens eines Kegelstumpfs kann parallel zur Basisfläche des Schleifkorns verlaufen und insbesondere einen Teil der Basisfläche bilden. Ist das Schleifkorn aus mehreren Kegeln oder Kegelstümpfen zusammengesetzt, deren Grundflächen in der gleichen Ebene liegen, so ist die Basisfläche insgesamt eben. Das Schleifkorn kann dann besonders stabil auf einer Schleifmittel-Unterlage fixiert werden, wenn diese ebene Basisfläche auf der Unterlage aufliegt.

Wenigstens zwei Teilkörper können einander zumindest teilweise durchdringen. Eine derartige Geometrie erlaubt es, mehr Teilkörper mit vorgegebenen Massen auf einer vorgegebenen Basisfläche anzuordnen. Hierdurch kann die Anzahl der Erhebungen, insbesondere der Spitzen, und somit auch die Schleifwirkung eines Schleifkorns erhöht werden. Beispielsweise können wenigstens zwei Kegel oder Kegelstümpfe, insbesondere wenigstens zwei Pyramiden oder Pyramidenstümpfe, einander durchdringen.

Die Mittelpunkte der Grundflächen der Kegel und/oder Kegelstümpfe können auf einer gemeinsamen Geraden liegen, welche parallel und insbesondere innerhalb der Basisfläche des Schleifkorns verlaufen kann. Die Mittelpunkte können dabei äquidistant angeordnet sein. Alternativ oder zusätzlich können mindestens drei Kegelspitzen, insbesondere mindestens drei Pyramidenspitzen, auf einer gemeinsamen Geraden liegen, welche parallel oder bevorzugt geneigt zur Basisfläche verlaufen kann.

Bevorzugt liegt die senkrechte Projektion des mindestens einen höchsten Punkts mindestens einer Erhebung, bevorzugt mehrerer Erhebungen, besonders bevorzugt aller Erhebungen auf die Basisfläche im Inneren der konvexen Hülle der Basisfläche, besonders bevorzugt im Inneren der Basisfläche. Bei dem höchsten Punkt einer Erhebung kann es sich um eine Kegelspitze handeln, welche die Erhebung bildet. Hierdurch ist ein Schleifkorn, welches mit seiner Basisfläche auf einer Schleifmittel-Unterlage aufliegt, besonders stabil gegenüber Kippkräften, die beim Eingriff der Erhebung mit einer bearbeiteten Oberfläche entstehen. Des Weiteren kann hierdurch erreicht werden, dass auch durch eine mechanische Streuung zumindest ein Grossteil der Schleifkörner mit ihrer Basisfläche auf der Schleifmittel-Unterlage zu liegen kommt. Somit weisen die Erhebungen dieses Grossteils der Schleifkörner von der Unterlage weg und auf eine bearbeitete Oberfläche hin.

Die Form und die Grösse des Schleifkorns können etwa mit Hilfe eines Mikroskops bestimmt werden. Das erfindungsgemässe Schleifkorn kann eine Grösse im gesamten Grössenbereich aufweisen, der auch für herkömmliche Schleifkörner üblich ist. Üblicherweise führen Schleifkörner mit grösseren Grössen zu einem höheren Materialabtrag von einer bearbeiteten Oberfläche als kleinere Schleifkörner. Beispielsweise kann das Schleifkorn eine Grösse im Bereich von 100 µm bis 2000 µm haben. Diese Grösse kann experimentell mit Hilfe eines Mikroskops bestimmt werden. Insbesondere kann die Gesamthöhe des Schleifkorns in dem genannten Bereich liegen. Unter der Gesamthöhe des Schleifkorns wird der grösste senkrecht zur Basisfläche gemessene Abstand eines Punktes des Schleifkorns von der Basisfläche verstanden. Alternativ oder zusätzlich kann der Flächendurchmesser der Basisfläche in dem genannten Bereich liegen. Der Flächendurchmesser ist der kleinste Durchmesser eines Kreises, welcher die Basisfläche enthält; er kann somit als Durchmesser eines Hüllkreises der Basisfläche aufgefasst werden. Im Falle einer beispielhaften quadratischen Basisfläche mit Seitelänge a ist der Flächendurchmesser √2 a.

Das Verhältnis zwischen der Gesamthöhe des Schleifkorns und dem Flächendurchmesser der Basisfläche kann im Bereich von 2:1 bis 1:5, bevorzugt von 1:1 bis 1:4, besonders bevorzugt im Bereich von 1:2 bis 1:3 liegen. Das Verhältnis zwischen der Höhe eines Teilkörpers, insbesondere eines Kegels oder Kegelstumpfs, und dem Flächendurchmesser der Grundfläche dieses Teilkörpers kann im Bereich von 2:1 bis 1:4, bevorzugt von 1:1 bis 1:3, besonders bevorzugt im Bereich von 1:2 bis 1:3 liegen.

Bei der oben beschriebenen Form des Schleifkorns handelt es sich um eine Idealisierung. Die Erfindung umfasst jedoch auch Schleifkörner, welche im Rahmen der Herstellungstoleranzen von dieser idealisierten Form abweichen.

Mögliche Abweichungen von der idealisierten Form können eine oder mehrere der folgenden Ursachen haben:
- Hohlräume oder Bläschen aufgrund eingeschlossener Luft und/oder anderer Gase in einer Dispersion, aus der die Schleifkörner hergestellt werden;
- fehlende Ecken und/oder Kanten, welche durch ein nicht komplettes Ausfüllen einer Giessform und/oder während eines Entfernens eines Vorprodukts des Schleifkorns aus einer Giessform entstehen;
- eingefallene Seitenflächen und/oder Kanten, die durch ein Schrumpfen während des Entfernens eines Teiles der flüchtigen Komponenten der Dispersion entstehen; insbesondere eingefallene Flächen, die aus der oberen freien, nicht in Kontakt mit der Giessform stehenden Fläche der Dispersion entstehen;
- Abplatzungen, welche durch einen Trocken- und/oder einen Sinterprozess hervorgerufen werden;
- abgebrochene Ecken und/oder Kanten, welche durch einen Transport und/oder während einer Weiterverarbeitung der Schleifkörner als Schüttgut entstehen.

Die Abweichungen von der Idealisierung müssen nicht zwangsläufig zu nachteiligen Eigenschaften des Schleifkorns führen. Beispielsweise können abgebrochene Ecke und/oder Kanten in einigen Ausführungsbeispielen auch bewirken, dass gegenüber der Idealisierung weitere Schneidkanten entstehen, die die Schleifwirkung sogar positiv beeinflussen können.

Insbesondere umfasst die Erfindung auch Schleifkörner, deren Form nur im Wesentlichen mit der idealisierten Form übereinstimmt. Beispielsweise wird die Basisfläche des Schleifkorns oder eine Grundfläche eines Kegels oder Kegelstumpfs auch dann als im Wesentlichen eben verstanden, wenn sie gewölbt ist und Krümmungsradien aufweist, die mindestens das Doppelte, bevorzugt mindestens das Fünffache, besonders bevorzugt mindestens das Zehnfache des Flächendurchmessers der Basisfläche betragen. Zudem wird ein Teilkörper auch dann als Kegel angesehen, wenn die Mantellinien zumindest teilweise oder sogar vollständig kurvenförmig sind und einen Krümmungsradius aufweisen, der mindestens das Doppelte, bevorzugt mindestens das Fünffache, besonders bevorzugt mindestens das Zehnfache der Gesamthöhe des Schleifkorns beträgt.

Bevorzugt weist das Schleifkorn aber eine wie oben beschriebene idealisierte Form auf.

Das Schleifkorn kann beispielsweise ein keramisches Material, insbesondere ein polykristallines keramisches Material, enthalten oder daraus bestehen. Bevorzugt enthält das Schleifkorn Aluminiumoxid, besonders bevorzugt α-Al₂O₃.

Alternativ oder zusätzlich kann das Schleifkorn auch noch mindestens ein weiteres Metalloxid enthalten, wie etwa Natriumoxid, Magnesiumoxid, Eisenoxid, Siliziumoxid, Kalziumoxid, Zirkonoxid, Yttriumoxid, Zinkoxid, Kobaltoxid, Nickeloxid, Hafniumoxid, Chromoxid, Praseodymoxid, Samariumoxid, Ytterbiumoxid, Neodymoxid, Lanthanoxid, Gadoliniumoxid, Ceroxid, Dysprosiumoxid, Erbiumoxid, Lutetiumoxid, Titanoxid, Manganoxid oder beliebige Kombinationen davon.

Viele dieser Metalloxide stammen von Verunreinigungen in den Ausgangsrohstoffen, wie beispielsweise in Aluminiumoxid. Bei ausreichend geringen Anteilen im Schleifkorn haben solche Verunreinigungen jedoch keinen negativen Einfluss auf die Herstellung und die Anwendung des Schleifkorns. Einige der genannten Verunreinigungen können sogar einen positiven Effekt auf das Schleifkorn haben.

Anteile von Zirkonoxid oder Yttriumoxid können beispielsweise von Mahlkugeln stammen, die in einem Mahlschritt bei der Herstellung der Schleifkörner verwendet werden können. Anteile von Eisenoxid können aus einem Mahlbehälter stammen, der bei einem solchen Mahlschritt verwendet wird.

Ebenfalls alternativ oder zusätzlich kann das Schleifkorn weitere Hartstoffe enthalten, wie beispielsweise Siliziumkarbid.

Weiterhin kann das Schleifkorn mindestens ein Zersetzungsprodukt eines unten näher beschriebenen Dispergators enthalten, der bei der Herstellung der Schleifkörner verwendet wurde. Ferner kann das Schleifkorn mindestens einen Keimbildner oder dessen Zersetzungsprodukt enthalten, welches bei der Herstellung der Schleifkörner verwendet wurde. Bei dem Keimbildner kann es sich beispielsweise um das oben bereits erwähnte Magnesiumoxid handeln. Zudem kann das Schleifkorn auch mindestens einen der weiteren in der EP 615 816 A1 beschriebenen Stoffe enthalten.

Die genannten Inhaltsstoffe können mit Hilfe von an sich bekannten chemischen Analyseverfahren bestimmt werden.

Das Schleifkorn kann ein Gefüge mit einer oder mehreren verschiedenen Phasen enthalten oder daraus bestehen. Dabei kann eine erste Phase aus Aluminiumoxid, besonders bevorzugt aus α-Al₂O₃ bestehen. Eine zweite Phase kann aus einem oder mehreren der oben genannten weiteren Metalloxide und/oder weiteren Hartstoffe bestehen.

Der Anteil an Aluminiumoxid, insbesondere an α-Al₂O₃, im Schleifkorn kann beispielsweise mindestens 25 Gew.-%, bevorzugt mindestens 50 Gew.-%, weiter bevorzugt mindestens 70 Gew.-%, besonders bevorzugt mindestens 95 Gew.-% betragen.

Das Schleifkorn kann eine Beschichtung aufweisen, welche nur einen Teil der Oberfläche bedeckt, insbesondere nur eine oder mehrere Kanten und/oder nur einen von mehreren flächigen Bereichen der Oberfläche. Bei der Beschichtung kann es sich etwa um eine ferromagnetische oder eine paramagnetische Beschichtung handeln. Eine solche teilweise Beschichtung der Oberfläche mit einem ferromagnetischen oder einem paramagnetischen Material ermöglicht es, das Schleifkorn in einem während des Streuens angelegten Magnetfeld in einer vorgegebenen Richtung auszurichten. Alternativ kann es sich auch um eine Beschichtung aus einem Material mit einer erhöhten Wärmeleitfähigkeit handeln oder um eine Beschichtung, welche eine erhöhte Adhäsion des Schleifkorns auf der Schleifmittel-Unterlage ermöglicht. Die Beschichtung kann insbesondere nur die Basisfläche des Schleifkorns bedecken. Hierdurch kann beispielsweise erreicht werden, dass auch ein Schleifkorn mit relativ spitzem Öffnungswinkel an der Spitze einer Erhebung mechanisch so auf eine Unterlage gestreut werden kann, dass die Basisfläche dort aufliegt.

Ein weiterer Aspekt der Erfindung betrifft eine Gesamtheit von Schleifkörnern. Unter einer Gesamtheit von Schleifkörnern wird hier und im Folgenden eine zusammengehörige Ansammlung von Schleifkörnern verstanden. Beispielsweise kann es sich dabei um eine Ansammlung von Schleifkörnern handeln, die in einem Gebinde enthalten und so gelagert und/oder transportiert werden, beispielsweise in einem Sack.

Eine solche Ansammlung von Schleifkörner kann zur Herstellung eines Schleifartikels verwendet werden. Als Gesamtheit von Schleifkörnern wird auch die Gesamtheit aller in einem Schleifartikel vorhandenen Schleifkörner angesehen.

Bevorzugt enthält die Gesamtheit von Schleifkörnern mindestens 20 Gew.-%, bevorzugt mindestens 50 Gew.-%, besonders bevorzugt mindestens 90 Gew.-% erfindungsgemässe Schleifkörner, so wie sie oben beschrieben wurden. Die übrigen in der Gesamtheit enthalten Schleifkörner können ebenfalls eine definierte Form aufweisen, welche jedoch von der erfindungsgemässen Form abweicht, oder sie können keine definierte Form aufweisen, da es sich beispielsweise um gebrochene Schleifkörner handelt. Diese übrigen in der Gesamtheit enthalten Schleifkörner werden auch als "Stützkörner" bezeichnet.

Es ist denkbar und liegt im Rahmen der Erfindung, dass die in der Gesamtheit enthaltenen erfindungsgemässen Schleifkörner voneinander verschieden ausgebildet sind. So kann die Gesamtheit von Schleifkörnern beispielsweise einen ersten Anteil von Schleifkörnern einer ersten erfindungsgemässen Ausführungsform enthalten sowie einen zweiten Anteil von Schleifkörnern einer zweiten erfindungsgemässen Ausführungsform, die von der ersten erfindungsgemässen Ausführungsform verschieden ist. Insbesondere können sich die Schleifkörner der ersten erfindungsgemässen Ausführungsform in ihrer Grösse und/oder in ihrer Form von den Schleifkörnern der zweiten erfindungsgemässen Ausführungsform unterscheiden.

Die Gesamtheit von Schleifkörnern kann ausschliesslich aus identischen erfindungsgemässen Schleifkörnern bestehen; insbesondere hat die Gesamtheit dann eine punktförmige Grössenverteilung.

Die Gesamtheit von Schleifkörnern kann im Wesentlichen eine Grössenverteilung aufweisen, die einem in der Schleifmittelindustrie üblichen Grössenstandard entspricht, beispielsweise dem American National Standards Institute (ANSI), den Standards der Federation of European Producers of Abrasives (FEPA) oder dem Japanese Industrial Standard (JIS). Beispielsweise kann die Gesamtheit der Schleifkörner im Wesentlichen eine Körnung P12, P16, P20, P24, P30, P36, P40, P50, P60, P80, P100, P120, P150, P180, P220, P240, P280, P320, P360, P400, P500, P600, P800, P1000, P1200, P1500, P2000, P2500, P3000 oder P5000 gemäss dem FEPA-Standard aufweisen. Dabei bedeutet eine Grössenverteilung "im Wesentlichen", dass zumindest 90 Gew.-%, bevorzugt mindestens 95 Gew.-%, weiter bevorzugt mindestens 99 Gew.-% und besonders bevorzugt sämtliche Schleifkörner der Gesamtheit von Schleifkörnern diesen Standard erfüllen.

Wie oben bereits beschrieben wurde, ist es auch denkbar, dass die Gesamtheit mindestens zwei verschiedene Anteile erfindungsgemässer Schleifkörner und/oder mindestens einen Anteil nicht erfindungsgemässer Schleifkörner enthält. Jeder dieser Anteile kann für sich eine Grössenverteilung aufweisen, die jeweils einem der oben genannten, in der Schleifmittelindustrie üblichen Grössenstandards entspricht.

Ein erfindungsgemässes Schleifkorn oder eine erfindungsgemässe Gesamtheit von Schleifkörnern kann beispielsweise mit dem folgenden, aus US 5,201,916 bekannten Verfahren hergestellt werden:
a) Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b) Einfüllen der Dispersion in mindestens eine Vertiefung einer Giessform;
c) optional Abrakeln einer Oberseite der Giessform, um zumindest einen Teil der Dispersion zu entfernen, der über die Oberseite der Giessform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform;
f) optional Kalzinieren des Schleifkorn-Vorprodukts;
g) Sintern des Schleifkorn-Vorprodukts, um mindestens ein Schleifkorn zu erhalten.

Vor und/oder während der Herstellung der Dispersion im Schritt a) können die Rohstoffe, insbesondere α-Aluminiumoxid-Partikel und/oder Partikel, welche in α-Aluminiumoxid umwandelbar sind, gemahlen werden. Dies kann beispielsweise mit Hilfe einer Kugelmühle erfolgen, insbesondere mit Hilfe einer Planetenkugelmühle.

Die Dispersion kann mindestens einen Dispergator enthalten. Ein solcher Dispergator erleichtert die Bildung der Dispersion und erhöht ihre Stabilität, indem er beispielsweise Schichten um die einzelnen Körner herum bildet, die das Zusammenklumpen verhindern. Bei dem Dispergator kann es sich beispielsweise um ein Polymer handeln. In der Regel zersetzt sich der Dispergator spätestens während des Sinterns im Schritt g).

Zum Herstellen der erfindungsgemässen Schleifkörner kann ein Giesswerkzeug verwendet werden, wobei das Giesswerkzeug mindestens eine Giessform umfasst, die mindestens eine Vertiefung mit einer jeweiligen Oberfläche aufweist, wobei die Oberfläche komplementär zur Form zumindest eines Teils der Oberfläche des Schleifkorns ist.

Die Giessform kann beispielsweise Silikon enthalten oder daraus bestehen. Die Vertiefungen können eine offene Deckfläche aufweisen, durch die die Dispersion eingefüllt werden kann. Die Vertiefungen der Giessform weisen jeweils eine Oberfläche auf, deren Form komplementär zur Form zumindest eines Teils der Oberfläche des gewünschten Schleifkorns ist. Bevorzugt weisen die Vertiefungen der Giessform jeweils eine Oberfläche auf, deren Form komplementär zur Form des Teils der Oberfläche des Schleifkorns ist, der nicht die Basisfläche des Schleifkorns bildet. Die Basisfläche des Schleifkorn kann dann aus der oberen freien, nicht in Kontakt mit der Giessform stehenden Fläche der Dispersion entstehen. Aufgrund des Schrumpfens während des Schritts d) ist es möglich, dass die Basisfläche nicht vollständig eben ist, sondern eine geringfügige Wölbung aufweist.

Das im Schritt d) entstehende Vorprodukt sollte bevorzugt mechanisch stabil genug sein, um in den nachfolgenden Schritten als Schüttgut weiterverarbeitet werden zu können. Das optionale Kalzinieren in Schritt f) ist insbesondere dann vorteilhaft oder sogar erforderlich, wenn die Dispersion mehrere verschiedene Rohstoffe enthält und eine Phasenumwandlung erforderlich ist.

Noch ein Aspekt der Erfindung betrifft einen Schleifartikel, welcher eine wie oben beschriebene Gesamtheit von Schleifkörnern enthält. Insbesondere können also mindestens 20 Gew.-%, bevorzugt mindestens 50 Gew.-%, besonders bevorzugt mindestens 90 Gew.-% aller Schleifkörner des Schleifartikels als erfindungsgemässe Schleifkörner ausgebildet sein, so wie sie oben beschrieben wurden. Die übrigen Schleifkörner können ebenfalls eine definierte Form aufweisen, welche jedoch von der erfindungsgemässen Form abweicht, oder sie können keine definierte Form aufweisen.

Bei dem Schleifartikel kann es sich beispielsweise um einen beschichteten Schleifartikel (englisch: "coated abrasive"), einen Vliesschleifartikel, um einen gebundenen Schleifartikel (englisch: "bonded abrasive") oder um eine Schleifbürste handeln.

Ein beschichteter Schleifartikel enthält eine insbesondere flexible Unterlage, wie beispielsweise Papier, Vulkanfiber, eine Folie, ein textiles Material, einen Schaumstoff oder mehrschichtige Kombinationen davon. Die Schleifkörner können mit Hilfe eines Grundbinders (englisch: "make coat") an der Unterlage befestigt sein. Der Grundbinder und die Schleifkörner können mit einem Deckbinder (englisch: "size coat") überdeckt sein. Optional kann oberhalb des genannten Deckbinders auch noch ein zweiter Deckbinder vorhanden sein (englisch: "supersize coat").

Als Grundbinder, Deckbinder und zweiter Deckbinder können sämtliche an sich bekannte Bindemittel eingesetzt werden, beispielsweise aus Kunstharz, wie etwa einem Phenolharz, einem Epoxid, einem Harnstoffharz, einem Melaminharz oder einem ungesättigten Polyesterharz. Der Deckbinder und/oder der zweite Deckbinder können zudem weitere übliche Wirkstoffe und/oder Füllstoffe enthalten.

Der Schleifartikel kann in unterschiedlichen Konfektionsformen vorliegen, beispielsweise als Schleifscheibe oder als Schleifband.

Die Erfindung umfasst auch ein Verfahren zum Herstellen eines wie oben beschriebenen erfindungsgemässen Schleifartikels. Das Verfahren enthält einen Schritt, in dem eine Gesamtheit von Schleifkörnern an und/oder in einem Substrat fixiert wird, insbesondere mittels eines Bindemittels. Bei dem Substrat kann es sich etwa um eine insbesondere flexible Unterlage eines beschichteten Schleifartikels, um ein Vliesmaterial eines Vliesschleifmittels, um eine Matrix eines gebundenen Schleifmittels oder um Borsten einer Schleifbürste handeln. Im Falle eines beschichteten Schleifartikels kann das Auftragen des Grundbinders und/oder der Schleifkörner und/oder des Deckbinders und/oder des zweiten Deckbinders mit einer an sich bekannten Methode erfolgen. Beispielsweise können die Schleifkörner elektrostatisch oder mechanisch (d. h. gravimetrisch) aufgetragen werden. Aufgrund der erfindungsgemässen Form der Schleifkörner wird auch beim mechanischen Streuen ein grosser Anteil der Schleifkörner so orientiert, dass zumindest ein Grossteil der Schleifkörner mit ihrer Basisfläche auf der Schleifmittel-Unterlage zu liegen kommt. Auf eine aufwändigere elektrostatische Streuung kann also verzichtet werden.

Ferner richtet sich die Erfindung auch auf Verfahren zum Schleifen einer Oberfläche mit einem wie oben beschriebenen Schleifartikel. Bei der Oberfläche kann es sich insbesondere um eine lackierte Oberfläche handeln. Im Falle einer lackierten Oberfläche sind Schleifkörner mit Grössen von 500 µm oder weniger besonders geeignet.

Im Folgenden wird die Erfindung mit Hilfe mehrerer Ausführungsbeispiele und Zeichnungen näher erläutert. Dabei zeigen
Figur 1a: eine Ausführungsform eines erfindungsgemässen Schleifkorns in einer perspektivischen Ansicht;

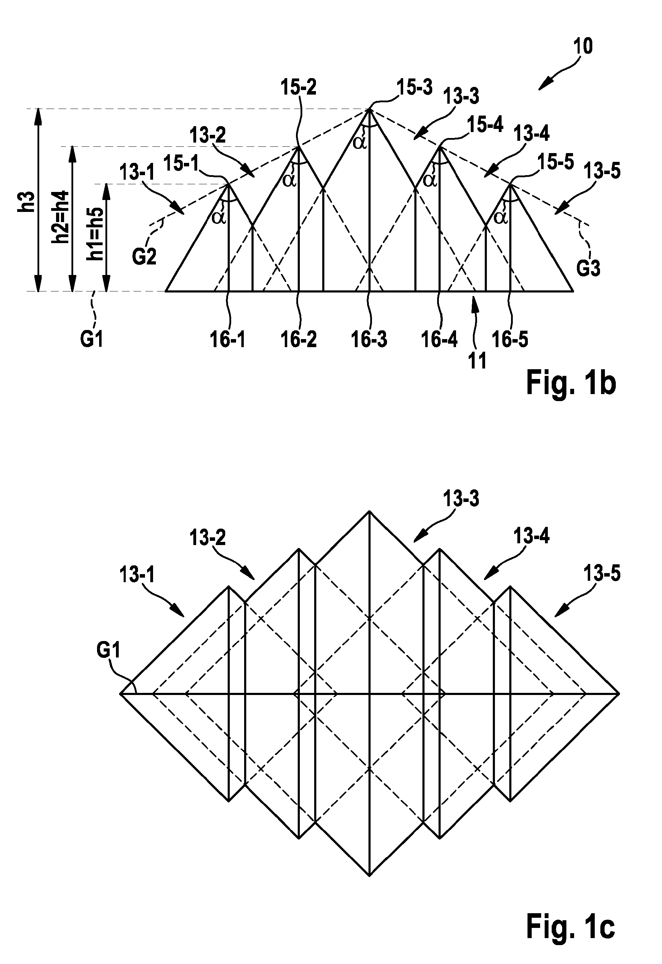

Figur 1b: das Schleifkorn gemäss Figur 1b in einer Seitenansicht;
Figur 1c: das Schleifkorn gemäss Figuren 1a und 1b in einer Draufsicht.

Das in den Figuren 1a bis c dargestellte Schleifkorn 10 besteht aus fünf einander teilweise durchdringenden Teilkörpern 13-1, ..., 13-5, die jeweils die Form einer geraden Pyramide mit quadratischer Grundfläche 14-1, ..., 14-5 haben. In der perspektivischen Ansicht der Figur 1a sind nur drei Pyramiden 13-1, 13-2, 13-3 erkennbar. Wie oben erläutert wurde, werden Pyramiden 13-1, ..., 13-5 im Sinne der hier verwendeten Terminologie als spezielle Kegel angesehen.

Die Pyramiden 13-1, ..., 13-5 durchdringen einander nur gedanklich; tatsächlich ist das Schleifkorn 10 natürlich einstückig ausgebildet und wird auch bevorzugt in einem Stück hergestellt, beispielsweise mit einem wie oben beschriebenen Verfahren.

Die einander durchdringenden Grundflächen 14-1, ..., 14-5 bilden zusammen eine ebene Basisfläche 11 des Schleifkorns 10, wie aus der Seitenansicht in Figur 1b ersichtlich ist. Die innerhalb des Schleifkorns 10 verlaufenden gestrichelten Linien in Figur 1b stellen keine tatsächlichen Kanten des Schleifkorns 10 dar, sondern nur die gedachten Kanten der Pyramiden 13-1, ..., 13-5. Ebenso stellen die in Figur 1c gestrichelten Linien keine tatsächlichen Kanten des Schleifkorns 10 dar.

Die Mittelpunkte 16-1, ..., 16-5 der Grundflächen 14-1, ..., 14-5 sind äquidistant und liegen auf einer gemeinsamen ersten Geraden G1, die innerhalb der Basisfläche 11 verläuft. Diese ebene Basisfläche 11 des Schleifkorns kann auf einer Schleifmittel-Unterlage befestigt werden, was eine besonders stabile Fixierung ermöglicht.

Jede der Pyramiden 13-1, ..., 13-5 weist eine Erhebung 12-1, ..., 12-5 des Schleifkorns 10 auf, deren höchster Punkt jeweils eine Spitze 15-1, ..., 15-5 bildet. Die Spitzen 15-1, 15-2 und 15-3 liegen äquidistant auf einer gemeinsamen zweiten Geraden G2, und die Spitzen 15-3, 15-4 und 15-5 liegen äquidistant auf einer gemeinsamen dritten Geraden G3. Über jede der Spitzen 15-1, ..., 15-5 kann gedanklich ein imaginärer Konus derart gestülpt werden, dass die zugehörige Erhebung 12-1, ..., 12-5 ganz im Inneren des Konus liegt und die Spitze 15-1, ..., 15-5 mit der Spitze des imaginären Konus übereinstimmt. Ein solcher Konus kann einen Öffnungswinkel α haben, der im Bereich von 30° bis 70° liegt. Um eine Orientierung des Schleifkorns auch mit Hilfe einer mechanischen Streuung erreichen zu können, ist beispielsweise ein wie in Figur 1b dargestellter Öffnungswinkel α = 60° vorteilhaft. Ein besseres Spanverhalten ergibt sich hingegen beispielsweise für α = 45°.

Der senkrechte Abstand einer Spitze 15-1, ..., 15-5 zur Basisfläche 11 definiert die Höhe h1, ..., h5 der jeweiligen Erhebung 12-1, ..., 12-5. Wie Figur 1b zu entnehmen ist, weist die mittlere Erhebung 12-3 die grösste Höhe h3 auf, welche mit der wie oben definierten Gesamthöhe des Schleifkorns 10 übereinstimmt. Die Höhen h2 und h4 der benachbarten Erhebungen 12-2 und 12-4 sind zueinander identisch und beide kleiner als die Höhe h3. Die Höhen h1 und h5 der äusseren Erhebungen 12-1 und 12-5 sind ebenfalls zueinander identisch und nochmals kleiner als die Höhen h2 und h4.

Die zur Basisfläche 11 senkrechten Projektionen der Spitzen 15-1, ..., 15-5 liegen alle innerhalb der Basisfläche 11 und damit auch innerhalb der konvexen Hülle der Basisfläche 11. Wenn das Schleifkorn 10 mit seiner Basisfläche 11 auf einer Schleifmittel-Unterlage angeordnet ist, so ist es stabil gegenüber Kippkräften, die beim Eingriff der Erhebung mit einer bearbeiteten Oberfläche entstehen.

Wenn dieses Schleifkorn 10 mit seiner Basisfläche 11 auf einer Schleifmittel-Unterlage aufliegt, so gerät die Spitze 15-3 der Erhebung 12-3 mit der grössten Höhe h3 zuerst mit einer bearbeiteten Oberfläche in Kontakt und entfaltet somit seine Schleifwirkung. Wenn die Erhebung 12-3 bei der Bearbeitung nach und nach abgetragen wird, so nimmt die Gesamthöhe des Schleifkorns 10 ab. Ist diese Gesamthöhe des teilweise abgetragenen Schleifkorns 10 gleich der zweitgrössten Höhe h2=h4 der Erhebungen 12-2 und 12-4, so geraten auch die Spitzen 15-2 und 15-4 dieser beiden Erhebungen 12-2 und 12-4 in Kontakt mit der bearbeiteten Oberfläche, so dass sie ebenfalls ihre Schleifwirkung entfalten können. Schliesslich gelangen nach einem weiteren Abtrag auch die Spitzen 15-1 und 15-2 der beiden Erhebungen 12-1 und 12-5 in Kontakt mit der Oberfläche. Auf diese Weise können während des Schleifens mehrmals neue, frische Spitzen 15-1, ..., 15-5 des Schleifkorns 10 eingesetzt werden, was die Standzeit des Schleifartikels erhöht und zudem den Abtrag während dieser Standzeit sehr gleichmässig macht.

Das Verhältnis aus der Seitenlänge der Grundfläche 14-1, ..., 14-5 und der Höhe h1, ..., h5 ist für jede Pyramide 13-1, ..., 13-5 gleich; daher sind alle fünf Pyramiden 13-1, ..., 13-5 zueinander ähnlich. Zudem ist jede Pyramide 13-1, ..., 13-5 so orientiert, dass die Projektionen von zwei ihrer Seitenkanten auf die Basisfläche 11 in der ersten Geraden G1 liegen, wie in Figur 1c zu sehen ist. Daher sind die Pyramiden 13-1, ..., 13-5 sogar durch eine geometrische Abbildung ineinander überführbar, die lediglich aus einer zentrischen Streckung und einer Verschiebung zusammengesetzt ist.

In Abwandlung zu dem hier gezeigten Ausführungsbeispiel könnte das Schleifkorn natürlich auch eine kleinere oder eine grössere Anzahl von Pyramiden enthalten. Eine, mehrere oder alle Pyramiden könnten auch durch Pyramidenstümpfe oder allgemeinere Kegel oder Kegelstümpfe (mit nicht polygonaler Grundfläche) ersetzt werden, insbesondere durch Kreiskegel oder Kreiskegelstümpfe. Zudem könnten die Mittelpunkte der Grundflächen auch nicht auf einer gemeinsamen Geraden liegen. Ebenso ist es denkbar, dass das Schleifkorn einen insbesondere prismenförmigen Sockel aufweist, auf dem mehrere Kegel oder Kegelstümpfe angeordnet sind, die einander nicht zwangsläufig durchdringen. Ausserdem müssen die Mittelpunkte der Grundflächen der Kegel weder auf einer gemeinsamen Geraden liegen noch äquidistant sein.

Die erfindungsgemässen Schleifkörner können beispielsweise mit einem im Folgenden beschriebenen Verfahren hergestellt werden: Zunächst wird eine Dispersion aus 200 g α-Al₂O₃, 0,4 g MgO, 90 g Wasser als Dispersionsmittel und 0,5 g Dispergator hergestellt. Das MgO fungiert dabei als Keimbildner. Als Dispergator kann beispielsweise das Produkt Dolapix CE64, erhältlich von Zschimmer & Schwarz, 56108 Lahnstein, Deutschland eingesetzt werden. Die somit erhaltene Dispersion wird für 30 Minuten bei 200 Umdrehungen pro Minute in einer Planetenkugelmühle gemahlen, beispielsweise einer Planetenkugelmühle PM400, erhältlich von der Retsch GmbH, 42781 Haan, Deutschland. Anschliessend wird die gemahlene Dispersion in eine Giessform aus Silikon eingefüllt, die Vertiefungen in der Form der gewünschten Schleifkörner enthält. Daraufhin wird die flüchtige Komponente, also das Wasser, aus der Dispersion entfernt. Hierdurch entsteht ein Schleifkorn-Vorprodukt, welches aus der Giessform entfernt wird. Die Basisfläche des Schleifkorn kann dann aus der oberen freien, nicht in Kontakt mit der Giessform stehenden Fläche der Dispersion entstehen. In einem abschliessenden Schritt wird das Vorprodukt als Schüttgut bei 1550 °C für 5 Minuten gesintert. Der Dispergator wird beim Sintern herausgebrannt.

Ein erfindungsgemässer Schleifartikel kann beispielsweise wie folgt hergestellt werden: Auf einer Unterlage aus Vulkanfiber mit einer Dicke von 0,8 mm wird eine Phenolharz-Dispersion als Grundbinder-Vorläufer in einer Menge von 120 g/m² aufgetragen. Anschliessend werden 600 g/m² der erfindungsgemässen Schleifkörner mittels elektrostatischer Streuung aufgetragen. Daraufhin wird der Grundbinder-Vorläufer zu einem Grundbinder gehärtet. Über dem Grundbinder und den Schleifkörnern wird eine Phenolharz-Dispersion in einer Menge von 800 g/m² als Deckbinder-Vorläufer aufgetragen, welche ebenfalls gehärtet wird.

## Patentansprüche

1. Schleifkorn (10) mit einer Basisfläche (11) und mindestens zwei sich davon erstreckenden Erhebungen (12-1, 12-2, 12-3, 12-4, 12-5),
**dadurch gekennzeichnet, dass**
eine erste Erhebung (12-3) senkrecht zur Basisfläche (11) eine erste Höhe (h3) aufweist und eine zweite Erhebung (12-2, 12-4) senkrecht zur Basisfläche (11) eine zweite Höhe (h2, h4) aufweist, welche kleiner ist als die erste Höhe (h3).

2. Schleifkorn (10) gemäss Anspruch 1,
**dadurch gekennzeichnet, dass**
der höchste Punkt mindestens einer Erhebung (12-1, 12-2, 12-3, 12-4, 12-5), bevorzugt mehrerer Erhebungen (12-1, 12-2, 12-3, 12-4, 12-5), besonders bevorzugt aller Erhebungen (12-1, 12-2, 12-3, 12-4, 12-5) als Spitze (15-1, 15-2, 15-3, 15-4, 15-5) ausgebildet ist.

3. Schleifkorn (10) gemäss Anspruch 1 oder 2,
**dadurch gekennzeichnet, dass**
das Schleifkorn (10) mehrere Teilkörper (13-1, 13-2, 13-3, 13-4, 13-5) enthält oder daraus besteht, die jeweils mindestens eine der Erhebungen (12-1, 12-2, 12-3, 12-4, 12-5) des Schleifkorns (10) aufweisen.

4. Schleifkorn (10) gemäss Anspruch 3,
**dadurch gekennzeichnet, dass**
mindestens zwei Teilkörper (13-1, 13-2, 13-3, 13-4, 13-5), insbesondere alle Teilkörper (13-1, 13-2, 13-3, 13-4, 13-5) zueinander ähnlich sind.

5. Schleifkorn (10) gemäss einem der Ansprüche 3 und 4,
**dadurch gekennzeichnet, dass**
mindestens ein Teilkörper (13-1, 13-2, 13-3, 13-4, 13-5), bevorzugt mehrere Teilkörper (13-1, 13-2, 13-3, 13-4, 13-5), besonders bevorzugt jeder Teilkörper (13-1, 13-2, 13-3, 13-4, 13-5) als Kegel, insbesondere als Pyramide (13-1, 13-2, 13-3, 13-4, 13-5), oder als Kegelstumpf, insbesondere als Pyramidenstumpf, ausgebildet ist.

6. Schleifkorn (10) gemäss Anspruch 5,
**dadurch gekennzeichnet, dass**
die Grundfläche (14-1, 14-2, 14-3, 14-4, 14-5) mindestens eines Kegels und/oder mindestens eines Kegelstumpfs parallel zur Basisfläche (11) des Schleifkorns (10) verläuft und insbesondere einen Teil der Basisfläche (11) bildet.

7. Schleifkorn (10) gemäss einem der Ansprüche 3 bis 6,
**dadurch gekennzeichnet, dass**
wenigstens zwei Teilkörper (13-1, 13-2, 13-3, 13-4, 13-5) einander zumindest teilweise durchdringen.

8. Schleifkorn (10) gemäss einem der vorangehenden Ansprüche,
**dadurch gekennzeichnet, dass**
die senkrechten Projektionen des mindestens einen höchsten Punkts mindestens einer Erhebung (12-1, 12-2, 12-3, 12-4, 12-5), bevorzugt mehrerer Erhebungen (12-1, 12-2, 12-3, 12-4, 12-5), besonders bevorzugt aller Erhebungen (12-1, 12-2, 12-3, 12-4, 12-5) auf die Basisfläche (11) im Inneren der konvexen Hülle der Basisfläche (11), bevorzugt im Inneren der Basisfläche (11) liegt.

9. Schleifkorn (10) gemäss einem der vorangehenden Ansprüche,
**dadurch gekennzeichnet, dass**
es ein keramisches Material, insbesondere ein polykristallines keramisches Material, enthält oder daraus besteht, bevorzugt Aluminiumoxid, besonders bevorzugt α-Al₂O₃.

10. Gesamtheit von Schleifkörnern (10),
**dadurch gekennzeichnet, dass**
sie mindestens 20 Gew.-%, bevorzugt mindestens 50 Gew.-%, besonders bevorzugt mindestens 90 Gew.-% Schleifkörner (10) nach einem der vorangehenden Ansprüche enthält.

11. Verfahren zum Herstellen mindestens eines Schleifkorns (10) oder einer Gesamtheit von Schleifkörnern (10) gemäss einem der vorangehenden Ansprüche,
**gekennzeichnet durch** die folgenden Schritte:
a) Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b) Einfüllen der Dispersion in mindestens eine Vertiefung einer Giessform;
c) optional Abrakeln einer Oberseite der Giessform, um zumindest einen Teil der Dispersion zu entfernen, der über die Oberseite der Giessform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Giessform;
f) optional Kalzinieren des Schleifkorn-Vorprodukts;
g) Sintern des Schleifkorn-Vorprodukts, um mindestens ein Schleifkorn (10) zu erhalten.

12. Giessform zum Herstellen mindestens eines Schleifkorns (10) nach einem der Ansprüche 1 bis 9, wobei die Giessform mindestens eine Vertiefung, bevorzugt eine Vielzahl von Vertiefungen, mit einer jeweiligen Oberfläche aufweist, wobei die Oberfläche komplementär zur Form zumindest eines Teils der Oberfläche des Schleifkorns (10) ist.

13. Schleifartikel, enthaltend eine Gesamtheit von Schleifkörnern (10) gemäss Anspruch 10.

14. Verfahren zum Herstellen eines Schleifartikels gemäss Anspruch 13, enthaltend einen Schritt, in dem eine Gesamtheit von Schleifkörnern (10) gemäss Anspruch 10 an und/oder in einem Substrat fixiert wird, insbesondere mittels eines Bindemittels.

15. Verfahren zum Schleifen einer Oberfläche, insbesondere einer lackierten Oberfläche, mit einem Schleifartikel gemäss Anspruch 13.
